(19)

**Europäisches Patentamt**

**European Patent Office**

**Office européen des brevets**

(11) **EP 4 686 056 A1**

(12) **EUROPEAN PATENT APPLICATION**

(43) Date of publication:
28.01.2026 Bulletin 2026/05

(21) Application number: 24190175.0

(22) Date of filing: 22.07.2024

(51) International Patent Classification (IPC):
H02M 1/00 (2006.01)   H02M 1/42 (2007.01)
H02M 7/217 (2006.01)   H02M 7/48 (2007.01)

(52) Cooperative Patent Classification (CPC):
H02M 1/0022; H02M 1/4216; H02M 1/4233;
H02M 1/4258; H02M 7/2173; H02M 7/4807

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Infineon Technologies Austria AG
9500 Villach (AT)

(72) Inventors:
• ZHANG, Daifei
  8057 Zurich (CH)
• KOLAR, Johann
  8044 Zürich (CH)
• KASPER, Matthias Joachim
  9500 Villach (AT)
• DEBOY, Gerald
  9061 Klagenfurt (AT)

(74) Representative: Westphal, Mussgnug & Partner,
Patentanwälte mbB
Werinherstraße 79
81541 München (DE)

(54) **POWER CONVERTER AND METHOD FOR OPERATING A POWER CONVERTER AND**

(57)    A method for operating a power converter and a power converter are disclosed. The power converter includes: three first nodes (a, b, c) and two second nodes (p, n); three transformers (1a, 1b, 1c) each comprising a first winding (11a, 11b, 11c) and a second winding (12a, 12b, 12c) inductively coupled with the first winding (11a, 11b, 11c); a first circuit (2) with three first stages (2a, 2b, 2c) each coupled to a respective one of the first nodes (a, b, c), the first winding (11a, 11b, 11c) of a respective one of the transformers (1a, 1b, 1c), and a common circuit node (o); and a second circuit (3) with four second stages (3A, 3B, 3C, 3D) each comprising a switched node (33A, 33B, 33C, 33D) and each coupled to the second nodes (p, n) via further nodes. The second windings (12a, 12b, 12c) are connected in series, and the four second stages (3A, 3B, 3C, 3D) are connected to the second windings (12a, 12b, 12c) such that each second winding (12a, 12b, 12c) is connected between the switched nodes (33A, 33B, 33C, 33D) of a respective pair of the four second stages (3A, 3B, 3C, 3D).

FIG 1

## Description

This disclosure relates in general to a method and a control circuit for operating a power converter, in particular a single stage three-phase PFC (Power Factor Correction) power converter.

Three-phase PFC power converters are widely used in various kinds of power conversion applications. Examples of such applications are on-board chargers (OBC) for charging a battery of a vehicle or power supplies for lighting, telecommunication, or computer server applications. A three-phase PFC power converter is configured to generate a rectified output voltage based on three alternating input voltages each received at a respective input, for example. Furthermore, in order to control a power factor, a three-phase PFC power converter is configured to control current waveforms of input currents received at the inputs such that, for example, the input currents have the same waveform as the input voltages.

The input voltages received at the inputs are grid voltages received from a power grid, for example. In many cases it is desirable to provide a galvanic isolation between the inputs where the alternating input voltages are received and an output where the rectified output voltage is provided. A conventional three-phase PFC power converter providing galvanic isolation between the input and the output may include two stages, a first stage configured to generate a rectified voltage (often referred to as a DC link voltage) based on the alternating input voltages, and a second stage configured to generate an output voltage based on the DC link voltage and to provide for a galvanic isolation between the first stage and the output. In this conventional three-phase PFC rectifier, the first stage usually includes three inductors and a DC link capacitor, and the second stage usually includes a transformer, an output capacitor and, optionally, an inductor in addition to the transformer. The inductors and the DC link capacitor are bulky and heavy and may take up to 50% of an overall size of the PFC rectifier.

There is a need for an improved three-phase PFC power converter.

One example relates to a power converter. The power converter includes three first nodes and two second nodes, three transformers each including a first winding and a second winding inductively coupled with the first winding; a first circuit with three first stages each coupled to a respective one of the first nodes, the first winding of a respective one of the transformers, and a common circuit node; and a second circuit with four second stages each including a switched node and each coupled to the second nodes via further nodes. The second windings are connected in series. The four second stages are connected to the second windings such that each second winding is connected between the switched nodes of a respective pair of the four second stages.

Another example relates to a method for operating a power converter. The power converter includes: three first nodes and two second nodes; three transformers each including a first winding and a second winding inductively coupled with the first winding; a first circuit with three first stages each coupled to a respective one of the first nodes, the first winding of a respective one of the transformers, and a common circuit node; and a second circuit with four second stages each including a switched node and each coupled to the second nodes via further nodes, wherein the second windings are connected in series, and wherein the four second stages are connected to the second windings such that each second winding is connected between the switched nodes of a respective pair of the four second stages. The method includes: determining three voltage values, each associated with a respective one of the first nodes; for each of the second stages, adjusting a first duty cycle and a second duty cycle dependent on two of the three voltage values and dependent on an asymmetry value; and operating the secondary side stages based on the first and second duty cycles.

Examples are explained below with reference to the drawings. The drawings serve to illustrate certain principles, so that only aspects necessary for understanding these principles are illustrated. The drawings are not to scale. In the drawings the same reference characters denote like features.

Figure 1 illustrates one example of a power converter that includes three first nodes, two second nodes, three transformers, a first circuit coupled between the first nodes and first windings of the transformers and a second circuit coupled between second windings of the transformers and the second nodes;

Figure 2 illustrates one example of voltages that may be received at the first nodes;

Figure 3 illustrates one example of the power converter according to Figure 1 in which a common node (neutral point) of the first circuit is connected to a star point of the transformers;

Figure 4 shows signal diagrams that illustrate one example for operating the power converter according to Figure 3;

Figure 5 illustrates one portion of a control circuit for controlling operation of the power converter;

Figure 6 shows further signal diagrams that illustrate one example for operating the power converter according to Figure 3;

Figures 7-9 show signal diagrams that illustrate operation of the power converter according to Figure 3 in different operating scenarios in which the power converter operates as a PFC rectifier;

Figures 10-12 show signal diagrams that illustrate operation of the power converter according to Figure 3 in different operating scenarios in which the power converter operates as an inverter;

Figure 13 shows one example of a controller configured to generate voltage values for operating the power converter in operating modes in which the power converter in which the power converter operates as an inverter;

Figure 14 illustrates one example for obtaining the neutral point correction values used for operating the power converter according to another example, wherein the neutral point correction values are dependent on a base neutral point correction value;

Figure 15 illustrates one example for obtaining the base neutral point correction value;

Figure 16 shows signal diagrams that illustrate operation of the power converter without taking into account neutral point correction values;

Figure 17 shows signal diagrams that illustrate operation of the power converter when taking into account the neutral point correction values;

Figure 18 illustrates another example for obtaining neutral point correction values; and

Figures 19-21 illustrate different examples of a bidirectionally blocking electronic switch.

In the following detailed description, reference is made to the accompanying drawings. The drawings form a part of the description and for the purpose of illustration show examples of how the invention may be used and implemented. It is to be understood that the features of the various embodiments described herein may be combined with each other, unless specifically noted otherwise.

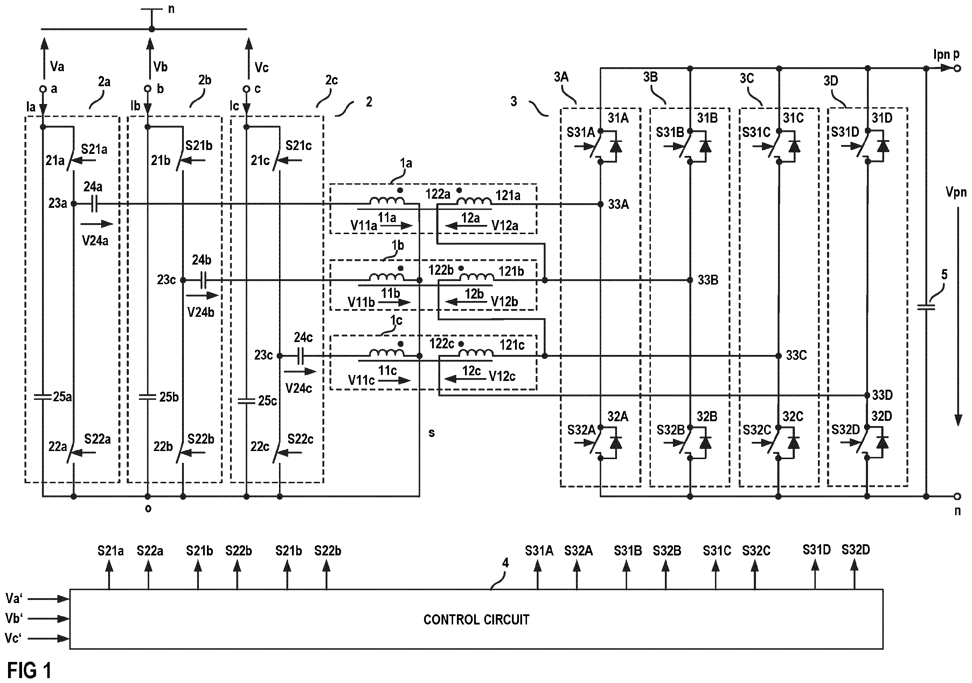

Figure 1 schematically illustrates a power converter according to one example. The power converter includes three first nodes a, b, c, two second nodes p, n, three transformers 1a, 1b, 1c, a first circuit 2 and a second circuit 3. The first circuit 2 includes three first stages 2a, 2b, 2c each coupled to a respective one of the first nodes a, b, c, the first winding 11a, 11b, 11c of a respective one of the transformers 1b, 1b, 1c and a common circuit node o. The common circuit node o may also referred to as neutral point of the first circuit 2.

Each of the transformers 1a, 1b, 1c includes a first winding 11a, 11b, 11c and a second winding 12a, 12b, 12c inductively coupled with the respective first winding 11a, 11b, 11c. The second circuit 3 includes four second stages 3A, 3B, 3C, 3D each including a switched node 33A, 33B, 33C, 33D and each coupled to the second nodes p, n via further circuit nodes, wherein the further circuit nodes are different from the switched node 33A, 33B, 33C, 33D.

Referring to Figure 1, the second windings 12a, 12b, 12c of the transformers 1a, 1b, 1c are connected in series. Furthermore, the four second stages 3A, 3B, 3C, 3D are connected to the second windings 12b, 12b, 12c such that each second winding 12a, 12b, 12c is connected between the switched nodes 33A, 33B, 33C, 33D of a respective pair of the four second stages 3A, 3B, 3C, 3D.

The power converter illustrated in Figure 1 can be operated bidirectionally. That is, the power converter can be operated in a first operating mode or a second operating mode.

In the first operating mode, a power flow in the power converter is from the first nodes a, b, c to the second nodes p, n. In this operating mode, voltages Va, Vb, Vc and currents Ia, Ib, Ic are received at the first nodes a, b, c and a current Ipn and a voltage Vpn are provided at the second nodes p, n. In this operating mode, the first nodes a, b, c are input nodes of the power converter, the second nodes p, n are output nodes of the power converter, the voltages Va, Vb, Vc received at the first nodes a, b, c are input voltages, the currents Ia, Ib, Ic received at the first nodes a, b, c are input currents, the voltage Vpn at the second nodes p, n is an output voltage, and the current Ipn at the second nodes p, n is an output current. The input voltages Va, Vb, Vc are referenced to a reference node n, for example.

In the first operating mode, the power converter may be configured to receive alternating input voltages Va, Vb, Vc at the first nodes a, b, c, regulate one of the output current Ipn and the output voltage Vpn for supplying a load, and regulate current waveforms of the input currents Ia, Ib, Ic in order to control a power factor and operate as a PFC (power factor correction) rectifier. The output current Ipn is a direct current and the output voltage Vpn is a direct voltage in the first operating mode, for example. Any type of load configured to receive a direct voltage and a direct current may be connected to the second nodes p, n in the first operating mode. According to one example, the load is a battery. In this example, the output voltage Vpn is defined by the battery and the power converter may be configured to regulate the output current Ipn.

In the second operating mode, a power flow in the power converter is from the second nodes p, n to the first nodes a, b, c. In this operating mode, a voltage Vpn and a current Ipn are received from a DC (direct current) power source at the second nodes p, n and currents Ia, Ib, Ic are provided at the first nodes a, b, c. In this operating mode, the second nodes p, n are input nodes, the first nodes a, b, c are output nodes, the voltage Vpn received at the second nodes p, n is an input voltage, the current Ipn received at the second nodes p, n is an input current, and the currents Ia, Ib, Ic provided at the first nodes a, b, c are output currents. In the second operating mode, the power converter may be configured to drive the currents Ia, Ib, Ic into a power grid. In this example, voltages Va, Vb, Vc between the first nodes a, b, c and the reference node n may be defined by the power grid. According to another example, in the second operating mode, the power converter is also configured to define the signal waveforms of the voltages Va, Vb, Vc between the first nodes a, b, c and the reference node n. This type of operating mode may be referred to as islanded mode.

In both the first operating mode and the second operating mode, power is transferred via the transformers 1a, 1b, 1c. In the first operating mode, power is transferred from the first windings 11a, 11b, 11c to the second windings 12a, 12b, 12c, and in the second operating mode, power is transferred from the second windings 12, 12b, 12c to the first windings 11a, 11b, 11c.

In the following, disregarding the direction of the power flow, the first windings 11a, 11b, 11c are also referred to as primary windings of the transformers 1a, 1b, 1c and the second windings 12a, 12b, 12c are also referred to as secondary windings of the transformers 1a, 1b, 1c. Furthermore, disregarding the direction of the power flow, the first nodes a, b, c are referred to as primary side nodes, the second nodes p, n are referred to as secondary side nodes, the first circuit 2 is referred to as primary side circuit or primary side switching circuit, the first stages 2a, 2b, 2c are referred to as primary side stages or primary side switching stages, the second circuit 3 is referred to as secondary side circuit or secondary side switching circuit, and the second stages 3A, 3B, 3C, 3D are referred to as secondary side stages or secondary side switching stages.

In the following, the transformers 1a, 1b, 1c are also referred to as first transformer 1a, second transformer 1b and third transformer 1c. The primary windings and the secondary windings of the transformers 1a, 1b, 1c are also referred to as first primary winding 11a, second primary winding 11b, third primary winding 11c, first secondary winding 12a, second secondary winding 12b and third secondary winding 12c. Furthermore, primary side nodes a, b, c are also referred to as first primary side node a, second primary side node b and third primary side note c.

Referring to the above, each of the secondary windings 12a, 12b, 12c is connected between the switched nodes of a respective one of three pairs of the secondary side stages 3A, 3B, 3C, 3D. These pairs of secondary side stages are mutually different, so that only one of the secondary windings 12a, 12b, 12c is connected between the switched nodes of the same pair. More specifically, a first secondary side stage 3A and a second secondary side stage 3B of the four secondary side stages 3A-3D form a first pair, the second secondary side stage 3B and a third secondary side stage 3C form a second pair, and the third secondary side stage 3C and a fourth secondary side stage 3D form a third pair. The first secondary winding 12a is connected between the switched nodes 33A, 33B of the first pair in that a first circuit node 121a of the first secondary winding 12a is connected to the switched node 33A of the first secondary side stage 3A and a second circuit node 122a of the first secondary winding 12a is connected to the switched node 33B of the second secondary side stage 3B. The second secondary winding 12b is connected between the switched nodes 33B, 33C of the second pair in that a first circuit node 121b of the second secondary winding 12b is connected to the switched node 33B of the second secondary side stage 3B and a second circuit node 122b of the second secondary winding 12b is connected to the switched node 33C of the third secondary side stage 3C. The third secondary winding 12c is connected between the switched nodes 33C, 33D of the third pair in that a first circuit node 121c of the third secondary winding 12c is connected to the switched node 33C of the third secondary side stage 3C and a second circuit node 122c of the third secondary winding 12c is connected to the switched node 33D of the fourth secondary side stage 3D.

The secondary windings 12a, 12b, 12c of the transformers 1b, 1b, 1c are connected in series in that the second circuit node 122a of the first secondary winding 12a is connected to the first circuit node 121b of the second secondary winding 12b and the second winding 122b of the second secondary winding 12b is connected to the first circuit node 121c of the third secondary winding 12c. Furthermore, in the following, voltages V12a, V12b, V12c across the secondary windings 12a, 12b, 12c are voltages between the first circuit node 121a, 121b, 121c and the second circuit node 122a, 122b, 122c of the respective secondary winding 12a, 12b, 12c.

According to one example each of the secondary side stages 3A, 3B, 3C, 3D includes a switch half-bridge with a first switch 31A, 31B, 31C, 31D and a second switch 32A, 32B, 32C, 32D connected in series between the second nodes p, n and connected with each other at the respective switched node 33A, 33B, 33C, 33D.

According to one example, as illustrated in Figure 1, each primary side stage 2a, 2b, 2c includes a switch half-bridge with a first switch 21a, 21b, 21c and a second switch 22a, 22b, 22c connected in series between the respective input node a, b, c and the common node (neutral point) o. The first and second switches 21a-21c, 22a-22c of each primary side stage 2a, 2b, 2c are connected to each other at a respective switched node 23a, 23b, 23c. The switched node 23a, 23b, 23c of each of the primary side stages 2a, 2b, 2c is coupled to the primary winding 11a, 11b, 11c of a respective one of the transformers 1a, 1b, 1c. More specifically, the switched node 23a of a first primary side stage 2a of the primary side stages 2a, 2b, 2c is coupled to a first primary winding 11a of the primary windings 11a, 11b, 11c, the switched node 23b of a second primary side stage 2b is coupled to a second primary winding 11b, and the switched node 23c of a third primary side stage 2c is coupled to a third primary winding 11c.

For coupling the switched nodes 23a, 23b, 23c to the first windings 11a, 11b, 11c the primary side stages 2a, 2b, 2c each include a respective capacitor 24a, 24b, 24c connected between the switched node 23a, 23b, 23c and a first circuit node of the respective first winding 11a, 11b, 11c. Furthermore, second circuit nodes of the primary windings 11a, 11b, 11c, which are circuit nodes facing away from the first circuit nodes, are connected to each other at a common circuit node, which is referred to as star point s in the following. According to one example, the star point s of the transformers 1a, 1b, 1c is connected to the neutral point o of the primary side circuit 2.

Optionally, each of the primary side stages 2a, 2b, 2c includes a further capacitor 25a, 25b, 25c connected in parallel with the respective switch half-bridge.

Referring to Figure 1, the power converter further includes a control circuit 4 that is configured to control operation of the primary side stages 2a, 2b, 2c and the secondary side stages 2A, 2B, 2C. For this, the control circuit 4 is configured to provide drive signals S21a, S21b, S21c to the first switches 21a, 21b, 21c in the primary side stages 2a, 2b, 2c and drive signals S22a, S22b, S22c to the second switches 22a, 22b, 22c in the primary side stages 2a, 2b, 2c and to provide drive signals S31A, S31B, S31C, S31D to the first switches 31A, 31B, 31C, 31D in the secondary side stages 3A, 3B, 3C, 3D and drive signals S32A, S32B, S32C, S32D to the second switches 32A, 32B, 32C, 32D in the secondary side stages 3A, 3B, 3C, 3D. Each of these drive signals is configured to switch on or off the respective switch. According to one example, the drive signals are PWM (pulse width modulated) drive signals. This is explained herein further below.

Optionally, a capacitor 5 is connected between the second nodes p, n for stabilizing the voltage Vpn between the second nodes p, n.

In the power converter according to Figure 1, in which each of the secondary windings 12a, 12b, 12c is connected between the switched nodes 33A, 33B, 33C, 33D of a respective pair of secondary side stages 3A, 3B, 3C, 3D, the voltages V12a, V12b, V12c across the secondary windings 12a, 12b, 12c can be suitably modulated in order to adjust a power flow through the power converter and, moreover, in order to compensate for effects resulting from various extraordinary operating scenarios that may occur during operation.

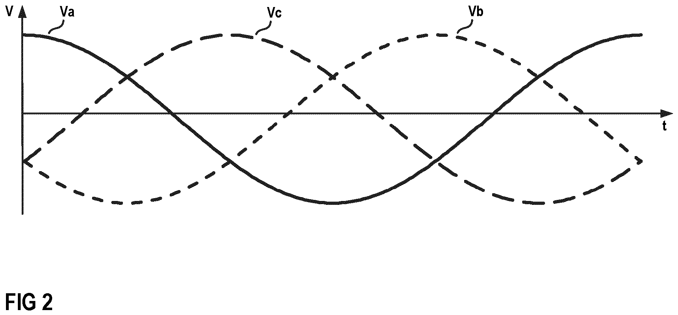

Extraordinary operating scenarios that may occur include asymmetries at the primary side nodes a, b, c, for example. In order to ease understanding one type of asymmetry that may occur at the primary side nodes, Figure 2 schematically illustrates signal diagrams of alternating voltages Va, Vb, Vc the power converter may receive at the primary side nodes a, b, c when the power converter is in the first operating mode and operates as a PFC rectifier.

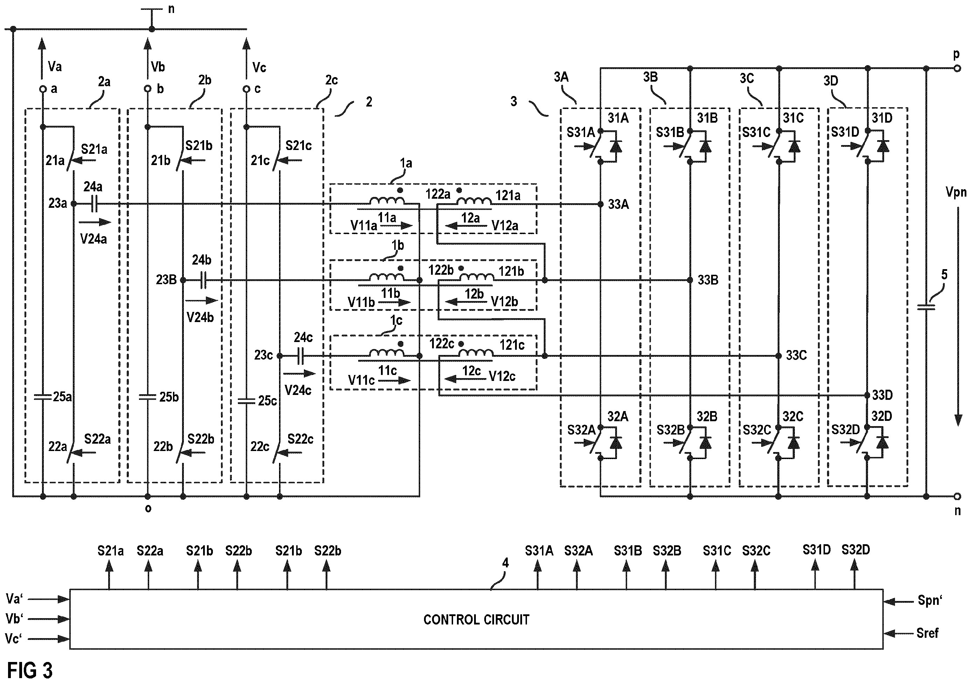

Referring to Figure 2, the voltages Va, Vb, Vc received at the primary side nodes a, b, c are sinusoidal input voltages, such as sinusoidal input voltages provided by a three-phase power grid. Referring to Figure 2, there is a phase shift between each pair of these input voltages Va, Vb, Vc, wherein the phase shift is 120° (2π/3), for example. A frequency of the input voltages Va, Vb, Vc, which is the reciprocal of the duration of one period, is 50 Hz or 60 Hz, for example. An RMS (root mean square) value of the input voltages Va, Vb, Vc is 230 $V_{RMS}$ or 110 $V_{RMS}$, for example (wherein the three input voltages Va, Vb, Vc have the same RMS value). The amplitude of each of the input voltages Va, Vb, Vc is $\sqrt{2}$ times the RMS value. As can be seen from Figure 3, each of the three sinusoidal input voltages Va, Vb, Vc periodically changes between a negative minimum voltage level and a positive maximum voltage level. The magnitude (absolute value) of the minimum voltage level equals the magnitude of the maximum voltage level and equals the amplitude.

When the power converter operates as a PFC rectifier, the currents Ia, Ib, Ic received at the primary side nodes a, b, c are adjusted to essentially have the same signal waveforms as the voltages Va, Vb, Vc in order to control a power factor of power received at the input nodes a, b, c. The voltages Va, Vb, Vc and the currents Ia, Ib, Ic received at the primary side nodes a, b, c may be in phase, so that each input current Ia, Ib, Ic is essentially proportional to the respective input voltage Va, Vb, Vc. It should be noted that due to a switched mode operation of the primary side stages 2a, 2b, 2c explained in the following, the currents Ia, Ib, Ic may include current ripples. Thus, "the currents Ia, Ib, Ic essentially having the same signal waveforms as the input voltages Va, Vb, Vc" relates to signal waveforms of the average currents Ia, Ib, Ic, wherein the average relates to the average over time periods that include one or more drive cycles of the switched mode operation of the primary side stages 2a, 2b, 2c.

An asymmetry at the primary side nodes a, b, c may occur when the three voltages Va, Vb, Vc have different amplitudes such as one of the three voltages having a lower amplitude than the other two voltages and/or when a relative phase shift is different from 120°. Thus, according to one example, an operating scenario in which there is symmetry at the primary side nodes a, b, c is an operating scenario in which sinusoidal voltages Va, Vb, Vc with the same amplitude and a relative phase shift of 120° are received at the primary side nodes a, b, c.

One example of a method for operating a power converter of the type illustrated in Figure 1 configured to compensate for asymmetries at the primary side nodes a, b, c is explained in the following. Referring to Figure 3, which shows a power converter of the type illustrated in Figure 1, this method includes connecting the neutral point o of the primary side circuit 2 to the reference node n, which is the circuit node to which the voltages Va, Vb, Vc received at the primary side nodes a, b, c are referenced to.

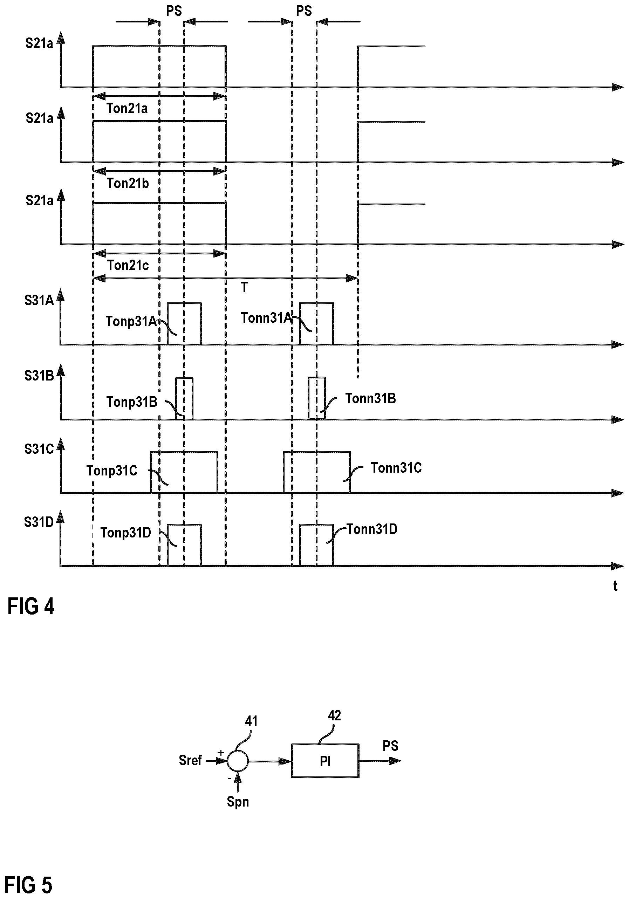

Furthermore, this method includes operating the primary side stages 2a, 2b, 2c and the secondary side stages 3A, 3B, 3C in the way illustrated in Figure 4. Figure 4 shows signal diagrams of the drive signals S21a, S21b, S21c received by the first switches 21a, 21b, 21c in the primary side stages 2a, 2b, 2c and signal diagrams of the drive signals S31A, S31B, S31C, S31D received by the first switches 31A, 31B, 31C in the secondary side stages 3A, 3B, 3C. Each of the drive signals S21a-S21c, S31A-S31D can have an on-level, which is a signal level switching on the respective switch, or an off-level, which is a signal level switching off the respective switch. Just for the purpose of illustration, in Figure 4, the on-level is a high signal level and the off-level is a low signal level.

In the primary side stages 2a-2c the first and second switches 21a-21c, 22a-22c are operated complementary. Thus, when the first switch 21a-21c of a respective primary side stage 2a-2c is in the on-state the second switch 22-22c is in the off-state, and vice versa. Thus, the drive signals S22a-S22c of the second switches 22a-22c, which are not illustrated in Figure 4, are complementary to the drive signals S21a-S21c of the first switches 21a-21c. According to one example illustrated in Figure 4, the primary side stages 2a, 2b, 2c are operated synchronously and at a duty cycle of at least approximately 50%. This includes that the first switches 21a-21c are switched on at the same time and for a respective time duration Ton21a, Ton21b, Ton21c, wherein these time durations Ton21a, Ton21b, Ton21c are equal and at least approximately 50% of the duration T of one drive cycle. According to one example, in each drive cycle, each of the first switches 21a-21c is in the on-state once for the respective time duration Ton21a, Ton21b, Ton21c.

Actually, the duty cycle of operating the first and second switches 21a-21c, 22a-22c in the primary side stages 2a-2c may be slightly less than 50%, as there may be a dead time between switching off one of the first and second switches 21a-21c, 22a-22c and switching on the other one of the first and second switches 21a-21c, 22a-22c in each primary side stage 2a, 2b, 2c in order to avoid a cross current. This dead time, however, is much shorter than the drive period duration T, and is less than 1% of the drive period duration T.

In the following, the switching frequency of the primary side stages 2a, 2b, 2c is the frequency of operating the first and second switches 21a-21c, 22a-22c. The switching frequency, of the primary side stages 2a, 2b, 2c, which is the reciprocal of the duration T of one drive cycle, is much higher than a frequency of the voltages Va, Vb, Vc received at the primary side nodes a, b, c. According to one example, the switching frequency of the primary side stages to 2a, 2b, 2c is at least 100 times the frequency of the voltages Va, Vb, Vc received at the first nodes a, b, c, so that each of these voltages Va, Vb, Vc can be considered to be essentially constant throughout the duration T of one drive cycle of the primary side stages 2a, 2b, 2c. According to one example, the switching frequency of the primary side stages 2a, 2b, 2c is selected from a range of between 10 kHz and 1 MHz, in particular between 50 kHz and 300 kHz.

In the secondary side stages 3A, 3B, 3C, 3D the first and second switches 31A-31D, 32A-32D are operated complementary. Thus, when the first switch 31A-31D is in the on-state the second switch 32A-32D is in the off-state, and vice versa. Thus, the drive signals S32A-S32D of the second switches 32A-32D, which are not illustrated in Figure 4, are complementary to the drive signals S31A-S31D of the first switches 31A-31D.

Operating the primary side stages 2a, 2b, 2c includes two half cycles, a first half cycle in which the respective first switch 21a-21c is in the on-state and the second switch 22a-22c is in the off-state, and a second half cycle, in which the first switch 21a-21c is in the off-state and the second switch 22a-22c is in the on-state.

The secondary side stages 3A-3D are operated at twice the frequency of the primary side stages 2a-2c, so that the first switch 31A-31D of each of the secondary side stages 3A-3D is in the on-state for a respective first on-time duration Tonp31A, Tonp31B, Tonp31C, Tonp31D in the first half cycle of operating the primary side stages 2a, 2b, 2c and in the on-state for a respective second on-time duration Tonn31A, Tonn31B, Tonn31C, Tonn31D in the second half cycle of operating the primary side stages 2a, 2b, 2c. The first and second time periods can be different.

In the following, the duty cycle of operation of the secondary side stages 3A, 3B, 3C, 3D is given by the duty cycle of operation of the respective first switch 31A, 31B, 31C, 31D, so that each secondary side stage 3A, 3B, 3C, 3D has two duty cycles, a first duty cycle dpA, dpB, dpC, dpD, that defines the first on-time duration Tonp31A, Tonp31B, Tonp31C, Tonp31D of the respective first switch 31A, 31B, 31C, 31D, that is, the on-time duration in the first half cycle of operation of the primary side stages 2a, 2b, 2c, and a second duty cycle dnA, dnB, dnC, dnD, that defines the duration of the second on-time duration Tonn31A, Tonn31B, Tonn31C, Tonn31D, that is, the on-time duration of the respective first switch 31A, 31B, 31C, 31D in the second half cycle of operation of the primary side stages 2a, 2b, 2c.

The first duty cycles dpA, dpB, dpC, dpD are given by

$$dpA = \frac{Tonp31A}{0.5 \cdot T} \qquad\qquad (1a)$$

$$dpB = \frac{Tonp31B}{0.5 \cdot T} \qquad\qquad (1b)$$

$$dpC = \frac{Tonp31C}{0.5 \cdot T} \qquad (1c)$$

$$dpD = \frac{Tonp31D}{0.5 \cdot T} \qquad (1d)$$

and the second duty cycles dnA, dnB, dnC, dnD are given by

$$dnA = \frac{Tonn31A}{0.5 \cdot T} \qquad (2a)$$

$$dnB = \frac{Tonn31B}{0.5 \cdot T} \qquad (2b)$$

$$dnC = \frac{Tonn31C}{0.5 \cdot T} \qquad (2c)$$

$$dnD = \frac{Tonn31D}{0.5 \cdot T} \qquad (2d),$$

where T denotes the time duration of one drive cycle of operating the primary side stages 2a, 2b, 2c, Tonp31A, Tonp31B, Tonp31C, Tonp31D denote the first on-time periods, and Tonn31A, Tonn31B, Tonn31C, Tonn31D denote the second on-time periods.

As illustrated in Figure 4, there may be a phase shift PS between the half cycles of operating the primary side stages 2a, 2b, 2c and the operating cycles of the secondary side stages 3A, 3B, 3C, 3D. According to one example, this phase shift PS is adjusted for controlling a power flow in the power converter and, therefore, for regulating a desired output signal in the power converter. If, for example, the power converter operates in the first operating mode and either the output current Ipn or the output voltage Vpn is regulated, the method includes comparing the output signal to be regulated with a set value (reference value) and adjusting the phase shift dependent on a difference between the output signal and the set value, for example.

Referring to Figure 5, for adjusting the phase shift PS, the control circuit 4 may include a subtractor 41 that calculates a difference between the signal Spn to be regulated and the set value Sref and a PI (proportional-integral) controller 42 that receives the difference and provides the desired phase shift PS in order to adjust the power flow. In Figure 4, Spn represents the instantaneous signal value of the signal to be regulated. This instantaneous signal value can be measured using a conventional sensor, for example. The signal to be regulated is the voltage Vpn between the secondary side nodes p, n, the current Ipn at the secondary side nodes p, n, or the power Ppn at the secondary side nodes, for example.. The power Ppn is given by the voltage Vpn multiplied with the current Ipn.

The method for operating the power converter further includes adjusting the first and second duty cycles dpA, dpB, dpC, dpD, dnA, dnB, dnC, dnD of the secondary side stages 3A, 3B, 3C, 3D dependent on voltage levels of the voltages Va, Vb, Vc received at the first nodes a, b, c, a common mode value Vcmp, Vcmn, an asymmetry value Vasymp, Vasymn, and a transformer value in order to compensate for possible asymmetries in the operating scenario. According to one example, the first duty cycles dpA, dpB, dpC, dpD, of the secondary side stages 3A, 3B, 3C, 3D are calculated as follows,

$$dpA = (Va' - Vc' + Vcmp + 3 \cdot Vasymp) \cdot kv \qquad (3a)$$

$$dpB = (Vb' - Va' + Vcmp + 2 \cdot Vasymp) \cdot kv \qquad (3b)$$

$$dpC = (Vc' - Vb' + Vcmp + Vasymp) \cdot kv \qquad (3c)$$

$$dpD = (Va' - Vc' + Vcmp) \cdot kv \qquad (3d),$$

where Vasymp denotes a first asymmetry value for calculating the first duty cycles and is given by

$$Vasymp = Va' + Vb' + Vc' \qquad (4),$$

and Vcmp denotes a first common mode value for calculating the first duty cycles and is given by Vcmp = -min(Va' - Vc' - Vb' + Vasymp, Vb' - Va' + 2·Vasymp, Va' - Vc'+ 3·Vasymp)    (5),

where min(.) denotes a minimum selecting operation, which is in operation that selects the minimum of the terms included in the brackets.

Furthermore, according to one example, the second duty cycles are calculated as follows,

$$dnA = (-Va' + Vc' + Vcmn + 3 \cdot Vasymn) \cdot kv \qquad (6a)$$

$$dnB = (-Vb' + Va' + Vcmn + 2 \cdot Vasymn) \cdot kv \qquad (6b)$$

$$dnC = (-Vc' + Vb' + Vcmn + Vasymn) \cdot kv \qquad (6c)$$

$$dnD = (-Va' + Vc' + Vcmn) \cdot kv \qquad (6d),$$

Vasymn denotes a second asymmetry value for calculating the second duty cycles and is given by

$$Vasymn = -Va' - Vb' - Vc' = -Vasymp \qquad (7),$$

and Vcmn denotes a second common mode value for calculating the second duty cycles and is given by,

Vcmn=-min(-Va$^1$+Vc$^1$-Vc$^1$+Vb$^1$+Vasymn,-Vb$^1$+Va$^1$+2·Vasymn,-Va$^1$+Vc$^1$+3·Vasymn)    (8),

where min(.) denotes the minimum selecting operation.

In each case, kv denotes a transformer value

$$kv = \frac{Ns}{2Np} \cdot \frac{1}{3Vpn} \qquad (9),$$

where Ns/Np denotes the turns ratio between the number of turns of the secondary windings 12a, 12b, 12c and the number of turns of the primary windings 11a, 11b, 11c and Vpn denotes the voltage at the secondary side nodes p, n. According to one example, the turns ratio is the same for each of the transformers 1a, 1b, 1c. According to one example, the turns ratio is selected from between 1/100 and 100/1 (0.01 and 100), in particular between 1/10 and 10/1 (0.1 and 10), for example.

Furthermore, in each case a first or second duty cycle is dependent on two voltage values, an asymmetry value Vasymn, Vasymp, a common mode value Vcmp, Vcmn, and the transformer value. The first duty cycle dpA of the first primary side stage 1a, for example, is dependent on the two voltage values Va', Vc', the asymmetry value Vasymp, the common mode value Vcmp, and the transformer value kv.

Furthermore, the voltage values Va', Vb', Vc' are dependent on the respective operating mode of the power converter. In the operating scenario in which the power converter operates as a PFC rectifier and receives voltages Va, Vb, Vc at the primary side nodes a, b, c each of the voltage values Va', Vb', Vc' represents a respective one of the voltages Va. Vb, Vc and is obtained by measuring the respective voltage Va, Vb, Vc using a voltage sensor, for example. The control circuit 4 receives these voltage values Va', Vb', Vc' and calculates the first and second duty cycles for operating the secondary side stages 3A, 3B, 3C, 3D.

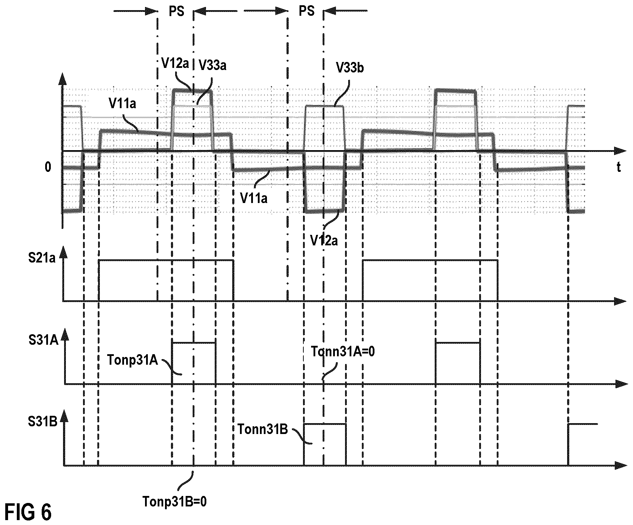

Figure 6 shows signal diagrams that illustrate how the secondary side voltages V12a, V12b, V12c of the transformers are shaped when operating the primary side stages 2a, 2b, 2c and the secondary side stages 3A, 3B, 3C, 3D in the way explained with reference to Figure 4. For this, Figure 6 shows signal diagrams of the voltage V11a across the first primary winding 11a and the voltage V12a across the first secondary winding V12a over two drive cycles of the primary side stages 2a, 2b, 2c. Furthermore, Figure 6 shows signal diagrams of the drive signal S21a received by the first switch 21a in the first primary side stage 2a and the drive signals S31A, S31B received by the first switches 31A, 31B in the first and second secondary side stages 3A, 3B that have their switched node 33A, 33B connected to the first secondary winding 12A. In the example illustrated in Figure 6, the second duty cycle dnA of the first secondary side stage 3A is zero, so that the first switch 31A of the first secondary side stage 3A does not switch on in the second half cycle (Tonn31A=0) and the first duty cycle dpB of the second secondary side stage 3B is zero, so that the first switch 31B of the second secondary side stage 3B does not switch on in the first half cycle (Tonp31B=0).

In the power converter, the voltage V24a, V24b, V24c across each of the capacitors 24a, 24b, 24c connected between the switched node 23a, 23b, 23c of a respective one of the primary side stages 2a, 2b, 2c and a respective one of the primary windings 11a, 11b, 11c adjusts to voltage level that at least approximately equals 50% of the instantaneous voltage level of the voltage Va, Vb, Vc received by the respective primary side stage 2a, 2b, 2c. Due to the switched mode operation of the primary side stages 2a, 2b, 2c, the voltage V11a, V11b, V11c across each of the primary windings 11a, 11b, 11c is an alternating voltage. In the first half cycle of operation of the primary side stages 1a, 1b, 1c the alternating voltage has a voltage value that at least approximately equals 50% of the instantaneous voltage value of the voltage Va, Vb, Vc received by the respective primary side stage 1a, 1b, 1c, so that

$$V11a \approx \frac{Va}{2} \qquad\qquad (10a)$$

$$V11b \approx \frac{Vb}{2} \qquad\qquad (10b)$$

$$V11c \approx \frac{Vc}{2} \qquad\qquad (10c).$$

In the second half cycle of operation of the primary side stages 1a, 1b, 1c the alternating voltage V11a, V11b, V11c has a voltage value that at least approximately equals 50% of the negated instantaneous voltage value of the voltage Va, Vb, Vc received by the respective primary side stage 1a, 1b, 1c, so that

$$V11a \approx -\frac{Va}{2} \qquad\qquad (11a)$$

$$V11b \approx -\frac{Vb}{2} \qquad\qquad (11b)$$

$$V11c \approx -\frac{Vc}{2} \qquad\qquad (11c).$$

Figure 6 shows an operating scenario in which the instantaneous voltage value of the voltage Va received by the first primary side stage 1a is positive, so that the voltage V11a across the first primary winding 11a is positive during the first half cycle and has a voltage level that at least approximately equals 50% of the voltage level of the voltage Va. During the second half cycle, the voltage V11a across the first primary winding 11a is negative and has a voltage level that at least approximately equals 50% of the voltage level of the voltage Va.

Referring to the above, each of the secondary windings 12a, 12b, 12c is connected between the switched nodes of a respective pair of the secondary side stages 3A, 3B, 3C, 3D. The voltage V12a, V12b, V12c across a secondary winding 12a, 12b, 12c is zero whenever the first switches of the respective pair of secondary side stages 3A, 3B, 3C, 3D are in the on-state at the same time or the second switches of the respective pair of secondary side stages 3A, 3B, 3C, 3D are in the on-state at the same time. The voltage V12a, V12b, V12c across a secondary winding 12a, 12b, 12c is different from zero whenever the first switch of one of the respective pair of secondary side stages 3A, 3B, 3C, 3D is in the on-state and the second switch of the other one of the respective pair of secondary side stages 3A, 3B, 3C, 3D is in the on-state.

Thus, in the example illustrated in Figure 6, the voltage V12a across the first secondary winding 12a is different from zero (a) in the first half cycle during the on-time duration Tonp31A of the first switch 31A of the first secondary side stage 3A and (b) in the second half cycle during the on-time duration Tonn31B of the first switch 31B of the second secondary side stage 3B.

In the example illustrated in Figure 6, the first switch 31B of the second secondary side stage 3B is not switched on in the first half cycle because the respective duty cycle dpB is zero in this example. Thus, that the voltage V12a across the first secondary winding 12a is different from zero throughout the entire on-time duration Tonp31A of the first switch 31A in the first secondary side stage 3A. Otherwise, the voltage V12a across the first secondary winding 12a would be zero also during a time duration in which the on-time durations Tonp31A, Tonp31B of the first switches 31A, 31B in the first and second secondary side stages 3A, 3B overlap.

Furthermore, in the example illustrated in Figure 6, the first switch 31A of the first secondary side stage 3A is not switched on in the second half cycle because the respective duty cycle dnA is zero. Thus, the voltage V12a across the first secondary winding 12a is different from zero throughout the entire on-time duration Tonn31B of the first switch 31B in the second secondary side stage 3B. Otherwise, the voltage V12a across the first secondary winding 12a would be zero also during a time duration in which the on-time durations Tonn31A, Tonn31B of the first switches 31A, 31B in the first and second secondary side stages 3A, 3B overlap.

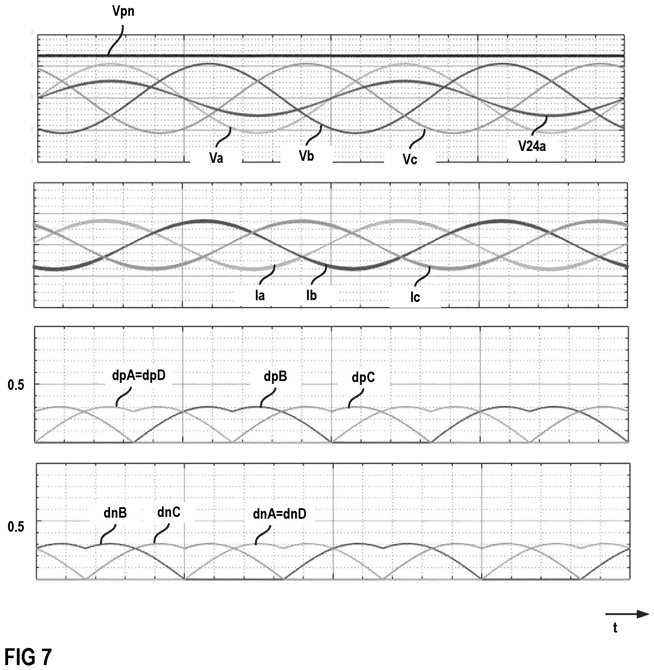

By adjusting the first and second duty cycles of operation of the secondary side stages 3A, 3b, 3C, 3D in accordance with equations (3a)-(3d) and (6a)-(6d) both a PFC functionality of the power converter and a compensation for possible asymmetries can be achieved. This is illustrated in Figures 7-9 each of which shows signal diagrams that illustrate operation of the power converter according to Figure 3 as a PFC rectifier. That is, Figures 7-9 illustrate operation of the power converter in the first operating mode, in which power is transferred from the primary side nodes a, b, c to the secondary side nodes p, n.

Each of Figures 7-9 illustrates signal diagrams of voltages Va, Vb, Vc and currents Ia, Ib, Ic received at the primary side nodes a, b, c when the power converter is in the first operating mode and of the first and second duty cycles dpA, dpB, dpC, dpD, dnA, dnB, dnC, dnD calculated in accordance with equations (3a)-(3d) and (6a)-(6d). Furthermore, each of Figures 7-9 illustrates the voltage V24a across the capacitor 24a of the first primary side stage 2a, which is approximately 50% of the voltage Va received by the first primary side stage 2a.

In the example illustrated in Figure 7, the voltages Va, Vb, Vc are sinusoidal voltages with a relative phase shift of 120° and having the same amplitude, so that there is no asymmetry at the primary side nodes a, b, c. In this example, the asymmetry values Vasymp, Vasymn are zero, so that the first duty cycles dpA, dpD of the first and fourth secondary side stages 3A, 3D are equal and the second duty cycles dnA, dnD of the first and fourth secondary side stages 3A, 3D are equal. As can be seen from Figure 7, each of the currents Ia, Ib, Ic received at the primary side nodes a, b, c has the same (sinusoidal) waveform as the corresponding voltage Va, Vb, Vc and an amplitude that is proportional to the amplitude of the respective voltage Va, Vb, Vc. This is a direct consequence of operating the secondary side stages in accordance with the first and second duty cycles dpA, dpB, dpC, dpD, dnA, dnB, dnC, dnD.

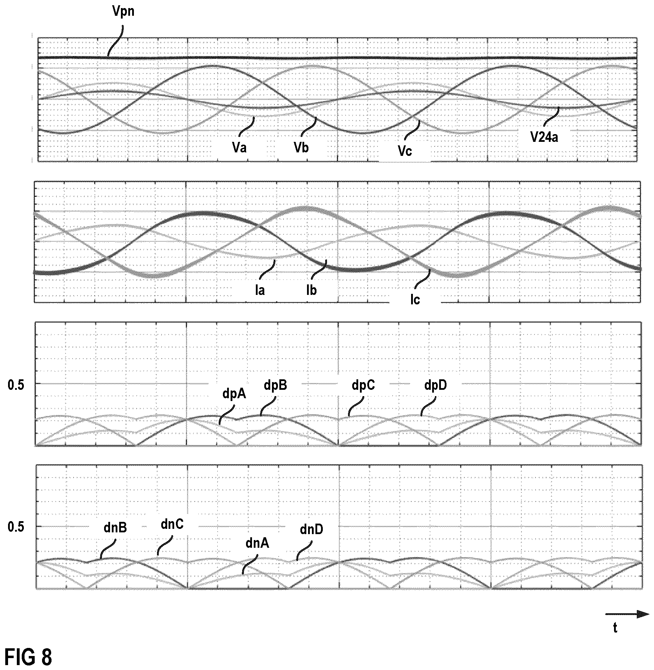

Figure 8 illustrates an operating scenario in which there is an asymmetry at the primary side nodes a, b, c such that the voltage Va at the first primary side node a has a lower amplitude than the voltages Vb, Vc at the second and third primary side nodes b, c. In this case, the asymmetry values Vasymp, Vasymn are different from zero so that the first duty cycles dpA, dpD of the first and fourth secondary side stages 3A, 3D are not equal and the second duty cycles dnA, dnD of the first and fourth secondary side stages 3A, 3D are not equal. As can be seen from Figure 8, each of the currents Ia, Ib, Ic received at the primary side nodes a, b, c has the same (sinusoidal) waveform as the corresponding voltage Va, Vb, Vc and an amplitude that is proportional to the amplitude of the respective voltage Va, Vb, Vc, so that the current Ia received at the first primary side node a has a lower amplitude than the currents Ib, Ic received at the second and third primary side nodes b, c. This is a direct consequence of operating the secondary side stages in accordance with the first and second duty cycles dpA, dpB, dpC, dpD, dnA, dnB, dnC, dnD. In particular, this is a direct consequence of considering the asymmetry (correction) values Vasymp, Vasymn in the calculation of the first and second duty cycles dpA, dpB, dpC, dpD, dnA, dnB, dnC, dnD.

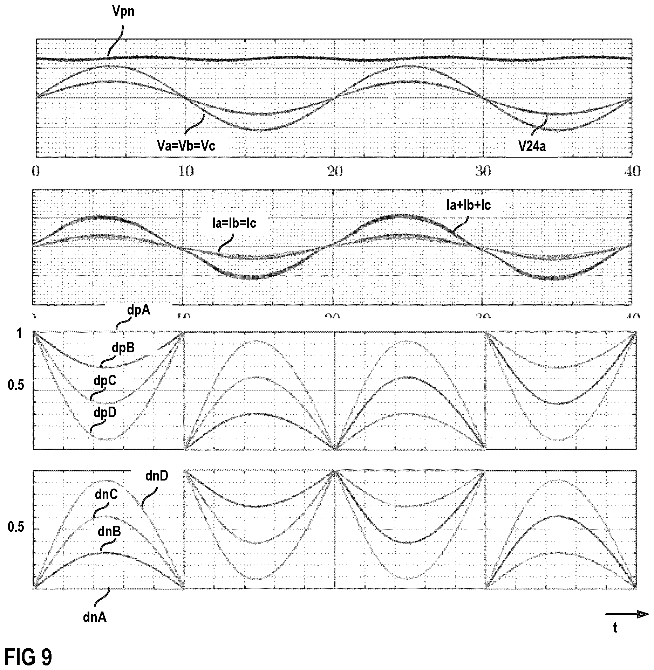

Figure 9 illustrates an operating scenario in which the same voltage is received at each of the primary side nodes a, b, c. Thus, the voltages Va, Vb, Vc received at the primary side nodes a, b, c have the same amplitude and a relative phase shift of 0°. In this case, the asymmetry values Vasymp, Vasymn are different from zero so that the first duty cycles dpA, dpD of the first and fourth secondary side stages 3A, 3D are not equal and the second duty cycles dnA, dnD of the first and fourth secondary side stages 3A, 3D are not equal. As can be seen from Figure 9, each of the input currents Ia, Ib, Ic received at the primary side nodes a, b, c has the same (sinusoidal) waveform as the corresponding voltage Va, Vb, Vc and an amplitude that is proportional to the amplitude of the respective voltage Va, Vb, Vc. This is a direct consequence of operating the secondary side stages in accordance with the first and second duty cycles dpA, dpB, dpC, dpD, dnA, dnB, dnC, dnD that include the asymmetry (correction) values Vasymp, Vasymn.

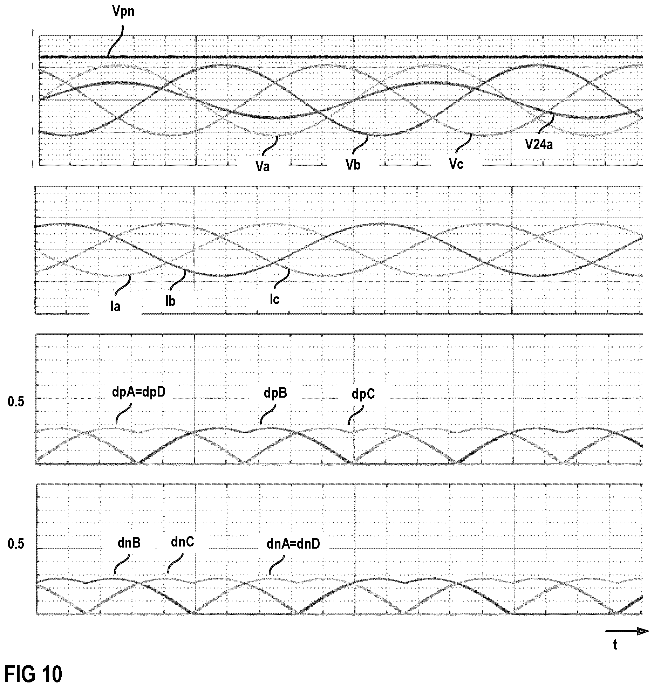

Figures 10-12 show signal diagrams that illustrate operation of the power converter according to Figure 3 in the second operating mode, which is the operating mode in which power is transferred from the secondary side nodes p, n to the primary side nodes a, b, c. The voltage Vpn at the secondary side nodes p, n is a direct voltage, and the current Ipn is a direct current, for example. The voltages Va, Vb, Vc at the primary side nodes a, b, c are alternating voltages, for example.

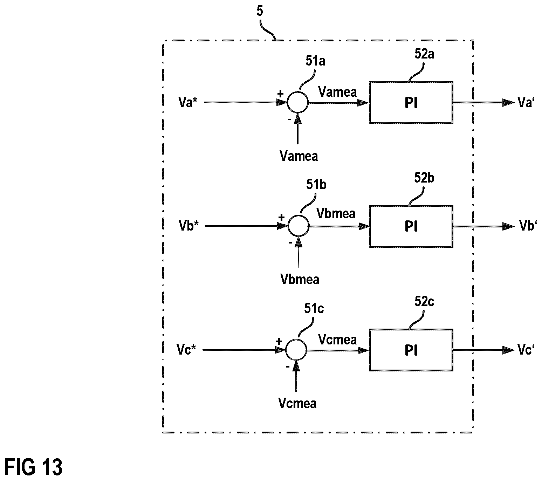

In this example, the voltage values Va', Vb', Vc' received by the control circuit 4 for calculating the first and second duty cycles dpA, dpB, dpC, dpD, dnA, dnB, dnC, dnD are generated by a further controller for example, which defines the signal waveforms of the voltages Va, Vb, Vc at the primary side nodes a, b, c. One example of this controller 5 is illustrated in Figure 13.

According to one example, the controller 5 is configured, for each of the primary side nodes a, b, c, (a) to receive a voltage reference Va*, Vb*, Vc* that represents a desired voltage at the respective primary side node a, b, c; (b) calculate a difference between the voltage reference Va*, Vb*, Vc* and the instantaneous voltage Va, Vb, Vc at the respective primary side node a, b, c to obtain an error signal Verra, Verrb, Verrc; (c) and provide the voltage value Va', Vb', Vc' based on the error signal Verra, Verrb, Verrc, using PI controller, for example. For this, referring to Figure 13, the controller 5 may include three subtractors 51a, 51b, 51c that each receive a respective one of the voltage references Va*, Vb*, Vc* and a voltage measurement value Vamea, Vbmea, Vcmea and provides a respective one of the error signal Verra, Verrb, Verrc. Each of the voltage measurement values Vamea, Vbmea, Vcmea represents a respective one of the instantaneous voltage values of the voltages Va, Vb, Vc and is obtained by measuring the respective voltage Va, Vb, Vc using a voltage sensor, for example. Furthermore, the controller 5 includes three PI controllers 52a, 52b, 52c. Each of the PI controllers 52a, 52b, 52c receives a respective one of the error signals Verra, Verrb, Verrc and provides a respective one of the measurement values Va', Vb', Vc' for calculating the first and second duty cycles dpA, dpB, dpC, dpD, dnA, dnB, dnC, dnD.

According to one example, the waveforms of the voltages Va, Vb, Vc at the primary side nodes a, b, c are defined by a power grid, so that the voltage references Va*, Vb*, Vc* are defined by grid voltages of the power grid. The power converter is configured to drive the currents Ia, Ib, Ic into the power grid and regulate the waveforms of the currents Ia, Ib, Ic to be in correspondence with the waveforms of the voltages Va, Vb, Vc in order to operate as a PFC inverter. The PFC functionality is a direct consequence of adjusting the first and second duty cycles dpA, dpB, dpC, dpD, dnA, dnB, dnC, dnD of the secondary side stages 3A, 3B, 3C, 3D in accordance with equations (3a)-(3d) and (6a)-(6d), wherein Va', Vb', Vc' represent measurement values of the voltages Va, Vb, Vc received at the primary side nodes a, b, c from the power grid.

According to another example, when the power converter operates in an islanded mode, for example, waveforms of the voltages at the primary side nodes a, b, c are defined by the controller providing the voltage values Va', Vb', Vc' for calculating the first and second duty cycles dpA, dpB, dpC, dpD, dnA, dnB, dnC, dnD. That is, in this example, the voltage references are generated by the controller providing the voltage values Va', Vb', Vc'.

Figure 10 shows signal diagrams that illustrate operation of the power converter according to Figure 3 as an inverter in an operating scenario in which sinusoidal voltages Va, Vb, Vc are received at the primary side nodes that have a relative phase shift of 120°. In this operating scenario, the asymmetry values Vasymp, Vasymn are zero, so that the first secondary side stage 3A and the fourth secondary side stage 3D have the same first duty cycles dpA, dpD and the same second duty cycles dnA, dnD. The currents Ia, Ib, Ic at the primary side nodes Ia, Ib, Ic have the same amplitudes and the same signal waveforms as the input voltages Va, Vb, Vc, wherein each current Ia, Ib, Ic has a phase shift of 180° relative to the respective voltage Va, Vb, Vc. That is, in this operating scenario, in which the power converter operates as an inverter, the currents Ia, Ib, Ic flow in a current direction opposite the current direction in the operating scenario in which the power converter operates as a rectifier. This is achieved by suitably adjusting the phase shift PS between the switched mode operation of the primary side stages 2a, 2b, 2c and the secondary side stages 3A, 3B, 3C, 3D. According to one example, in the inverter mode, the phase shift PS is adjusted by the control circuit 4 to have a predefined phase shift value, wherein this phase shift value is selected such that there is a 180° phase shift between the voltage Va, Vb, Vc and the current Ia, Ib, Ic at the respective primary side node a, b, c.

The operating scenario illustrated in Figure 10 can be considered a symmetric operating scenario.

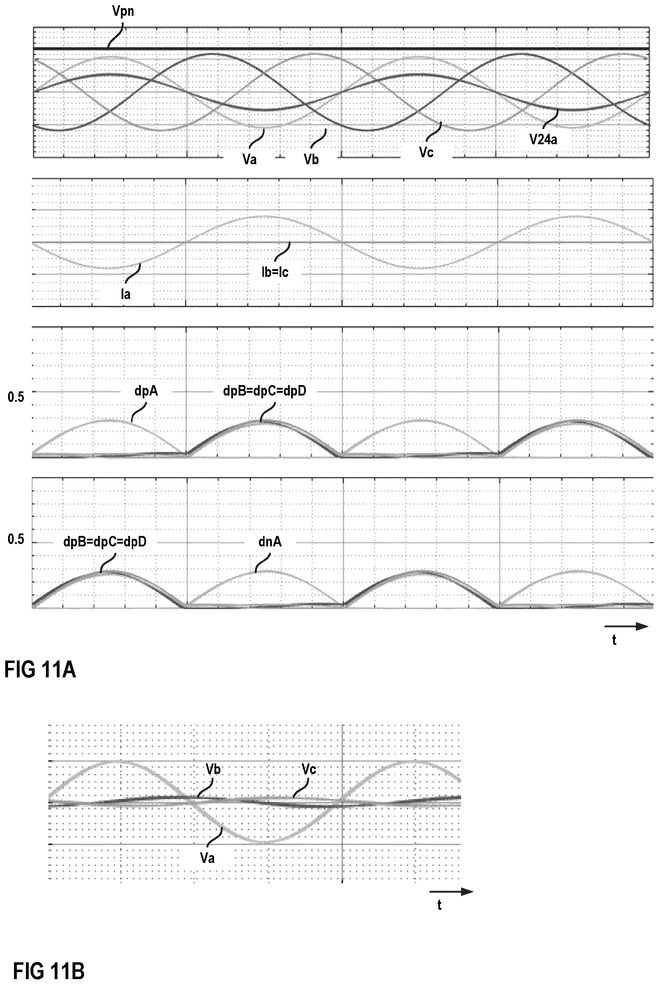

Figures 11A-11B show signal diagrams that illustrate another example of operating the power converter according to Figure 3 as an inverter. In this example, the second and third primary side nodes b, c are disconnected from the power grid or load receiving the voltages Va, Vb, Vc generated by the power converter, so that the currents Ib, Ic at the second and third primary side nodes b, c are essentially zero.

In this example, the voltages Vb, Vc at the second and third primary side nodes b, c essentially equal the voltage references Vb*, Vc* for these primary side nodes b, c, so that the error signals generated for these primary side nodes b, c by the controller generating the voltage values Va', Vb', Vc' are essentially zero. Thus, the voltage values Vb', Vc' associated with the second and third primary side nodes and used for calculating the first and second duty cycles dpA, dpB, dpC, dpD, dnA, dnB, dnC, dnD are essentially zero. Thus, as illustrated in Figure 11A, there are time periods in which some of the first and second duty cycles are essentially zero. Examples for the voltage values Va', Vb', Vc' used for calculating the first and second duty cycles in the signal diagrams shown in Figure 11A are illustrated in Figure 11B.

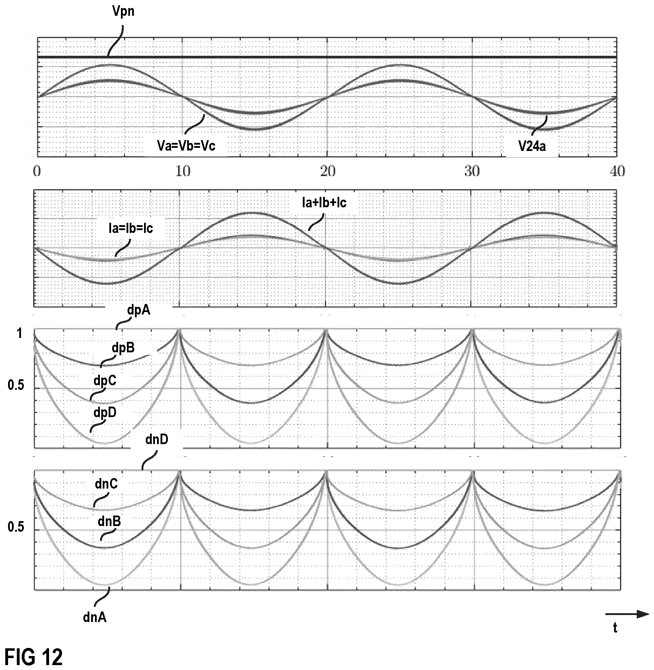

Figure 12 shows signal diagrams that illustrate another example of operating the power converter according to Figure 3 as an inverter. In this example, the same voltage is received at each of the primary side nodes a, b, c and the power converter is configured to generate the current Ia, Ib, Ic provided at each of the primary side nodes a, b, c to have the same waveform as the respective voltage Va, Vb, Vc and a phase shift of 180° relative to the respective voltage Va, Vb, Vc.

In the example illustrated in Figure 3, the neutral point o, at which the primary side stages 2a, 2b, 2c are connected to each other and which is connected to the star point s of the primary windings 11a, 11b, 11c of the transformers 1a, 1b, 1c, is connected to the reference node n of the voltages Va, Vb, Vc at the primary side nodes a, b, c. According to another example, as illustrated in Figure 1, the neutral point o is not connected to the reference node n, so that a voltage Von between the neutral point o and the reference node n may become different from zero. One example of a method for operating the power converter when the neutral point o and the reference node n are not connected is explained in the following. In this method, the primary side stages 2a, 2b, 2c are operated in the same way as explained hereinabove. That is, the first and second switches 21a-21c, 22a-22c are operated complementarily and at a duty cycle of at least approximately 50%. Furthermore, the secondary side stages 3A, 3B, 3C, 3D are operated in a similar way as explained hereinabove, with the only difference that the first and second duty cycles dpA, dpB, dpC, dpD, dnA, dnB, dnC, dnD are calculated different from the first and second duty cycles according to equations (3a)-(3c), (6a)-(6d).

According to one example, operating the power converter with the neutral point o and the reference node n not connected includes calculating the first and second duty cycles as follows,

$$dpA = (Va' - Vc' + Vcmp + 3 \cdot Vasymp + VnpA) \cdot kv \qquad (12a)$$

$$dpB = (Vb' - Va' + Vcmp + 2 \cdot Vasymp + VnpB) \cdot kv \qquad (12b)$$

$$dpC = (Vc' - Vb' + Vcmp + Vasymp + VnpC) \cdot kv \qquad (12c)$$

$$dpD = (Va' - Vc' + Vcmp + VpnpD) \cdot kv \qquad (12d)$$

$$dnA = (-Va' + Vc' + Vcmn + 3 \cdot Vasymn - VnpA) \cdot kv \qquad (13a)$$

$$dnB = (-Vb' + Va' + Vcmn + 2 \cdot Vasymn - VnpB) \cdot kv \qquad (13b)$$

$$dnC = (-Vc' + Vb' + Vcmn + Vasymn - VnpC) \cdot kv \qquad (12c)$$

$$dnD = (-Va' + Vc' + Vcmn - VnpD) \cdot kv \qquad (13d),$$

where Vasymp is calculated in accordance with equation (4), Vcmp is calculated in accordance with equation (5), Vasymn is calculated in accordance with equation (7), Vcmn is calculated in accordance with equation (8) and kv is calculated in accordance with equation (9). As can be seen by comparing equations (12a)-(12d) with equations (3a)-(3d) and by comparing equations (6a)-(6d) with equations (13a)-(13d) calculating the first and second duty cycles dpA, dpB, dpC, dpD, dnA, dnB, dnC, dnD for operating the power converter in the operating mode in which the neutral point o and the reference node n are not connected is very similar to calculating the first and second duty cycles dpA, dpB, dpC, dpD, dnA, dnB, dnC, dnD for operating the power converter in the operating mode in which the neutral point o and the reference node n are connected, wherein according to equations (12a)-(12d) and (13a)-(13d) a respective neutral point correction value VnpA, VnpB, VnpC, VnpD is taken into account in the calculation of the respective first or second duty cycle dpA, dpB, dpC, dpD, dnA, dnB, dnC, dnD.

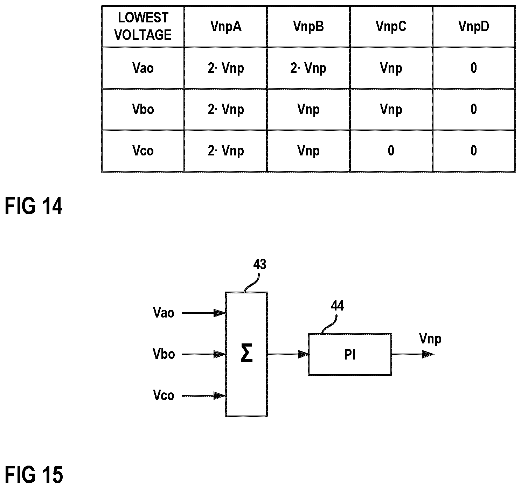

According to one example, the neutral point correction values VnpA, VnpB, VnpC, VnpD are dependent on the respective state of voltages Vao, Vbo, Vco between the primary side nodes a, b, c and the neutral point o. More specifically, the neutral point correction values are dependent on which of the voltages Vao, Vbo, Vco instantaneously is the lowest of the voltages Vao, Vbo, Vco. The lowest voltage is the voltage having the lowest magnitude. One example for obtaining the neutral point correction values VnpA, VnpB, VnpC, VnpD dependent on the voltages Vao, Vbo, Vco is illustrated in Figure 14.

Figure 14 shows a table that illustrates one example for obtaining the neutral point correction values VnpA, VnpB, VnpC, VnpD dependent on which of the voltages Vao, Vbo, Vco is instantaneously the lowest voltage. In the example illustrated in Figure 14, the neutral point correction values are multiples of a base neutral point correction value Vnp or zero. If, for example, the voltage Vao between the first primary side node a and the neutral point o is the lowest voltage, the neutral point correction value VnpA considered in the calculation of the first and second duty cycles dpA, dnA of the first secondary side stage 2A equals two times the base neutral point correction value Vnp (VnpA=2·Vnp); the neutral point correction value VnpB considered in the calculation of the first and second duty cycles dpB, dnB of the second secondary side stage 2B equals two times the base neutral point correction value Vnp (VnpA=2·Vnp); the neutral point correction value VnpC considered in the calculation of the first and second duty cycles dpC, dnC of the third secondary side stage 2C equals the base neutral point correction value Vnp (VnpC=Vnp); and the neutral point correction value VnpD considered in the calculation of the first and second duty cycles dpD, dnD of the fourth secondary side stage 2D is zero (VnpD=0).

One example for obtaining the neutral point correction value Vnp is illustrated in Figure 15. Figure 15 illustrates a portion of the control circuit 4 that is configured to calculate the neutral point correction value Vnp, which is then processed in accordance with the table illustrated in Figure 14 and in accordance with equations (10a)-(10d) and (11a)-(11d) to obtain the first and second duty cycles dpA, dpB, dpC, dpD, dnA, dnB, dnC, dnD for operating the secondary side stages 3A, 3B, 3C, 3D.

Referring to Figure 15, obtaining the neutral point correction value Vnp includes obtaining voltage values of the voltages Vao, Vbo, Vco between the primary side nodes a, b, c and the neutral point o. These voltage values can be obtained by measuring the voltages using conventional voltage sensors. The method further includes adding up the voltage values Vao, Vbo, Vco using an adder 43 and providing the result of adding up the voltage values Vao, Vbo, Vco to a controller 44, such as a PI controller, that provides the base neutral point correction value Vnp.

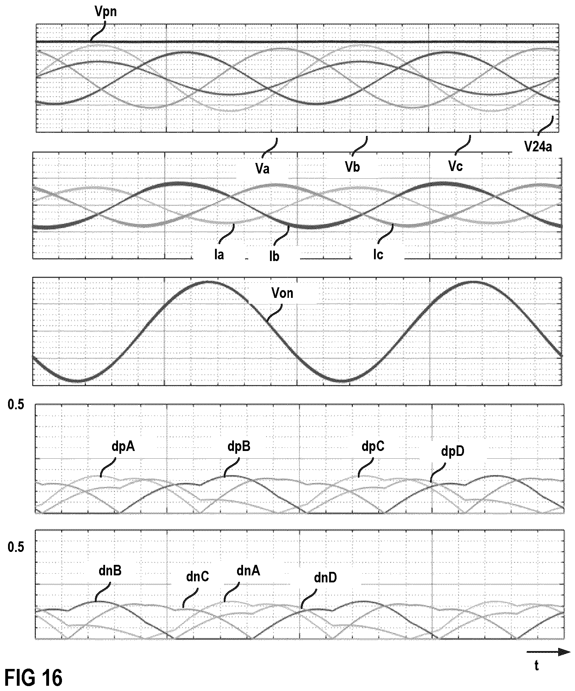

The neutral point correction values VnpA, VnpB, VnpC, VnpD take into account asymmetries that may occur in the power converter, such as asymmetries of capacitors and inductors on the primary side. Figure 16 shows signal diagrams that illustrate operation of the power converter when the neutral point o and the reference node n are not connected and when the first and second duty cycle are calculated in accordance with equations (3a)-(3d) and (6a)-(6d), that is, without considering the neutral point correction values VnpA, VnpB, VnpC, VnpD. The signal diagrams shown in Figure 16 are based on an example, in which each of the capacitors 24a, 25a in the first primary side stage 2a has a capacitance that is 20% higher than the (rated) capacitance of the respective capacitor 24c, 25c in the third primary side stage 2c; the inductance of the primary winding 11a in the first primary side stage 2a has an inductance that is 20% higher than the (rated) inductance of the primary winding 11c in the third primary side stage 1c; each of the capacitors 24b, 25b in the second primary side stage 2b has a capacitance that is 20% lower than the (rated) capacitance of the respective capacitor 24c, 25c in the third primary side stage 2c; and the inductance of the primary winding 11b in the second primary side stage 2b has an inductance that is 20% lower than the (rated) inductance of the primary winding 11c in the third primary side stage 1c. Such as symmetry or imbalance of the capacitors and inductors may result in an alternating voltage Von between the neutral point o and a reference node n with a significant amplitude.

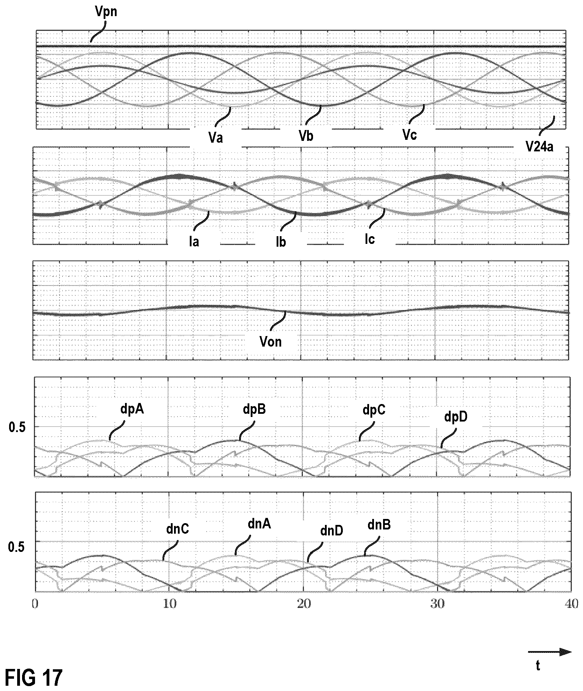

Figure 17 shows the signal diagrams according to Figure 16 with the difference that the first and second duty cycles dpA, dpB, dpC, dpD, dnA, dnB, dnC, dnD have been calculated in accordance with equations (10a)-(10d) and (11a)-(11d), so that the neutral point correction values VnpA, VnpB, VnpC, VnpD have been taken into account. As can be seen from Figure 17, there is still an alternating voltage Von between the neutral point o and a reference node n. The amplitude of this voltage Von, however, is much lower than in the example illustrated in Figure 16 and, according to one example, is less than 10% of the amplitude in the example according to Figure 16.

In the power converter explained herein before, each of the secondary windings 12a, 12b, 12c is coupled to a respective primary side stage 1a, 1b, 1c through its primary winding 11a, 11b, 11c. The primary side stage 1a, 1b, 1c a secondary winding 12a, 12b, 12c is coupled to is referred to as primary side stage that is associated with the respective secondary winding, and vice versa.

In the example illustrated in Figure 14, each of the neutral point correction values VnpA, VnpB, VnpC, VnpD can have three different values 0, Vnp, 2·Vnp. Referring to the above, the power flow through a respective primary side stage Ia, 1b, 1c can be affected by suitably operating the secondary side stages 3A, 3B, 3C, 3D. More specifically, the power flow through a respective primary side stage 1a, 1b, 1c is affected by the duty cycles of that pair of secondary side stages 3A, 3B, 3C, 3D that has the secondary winding that is associated with the respective primary side stage connected between its switched nodes. The power flow through the first primary side stage 1a, for example, is affected by the duty cycles of the first and second secondary side stages 3A, 3B that have the secondary winding 12a that is as associated with the first primary side stage 1a connected between its switched nodes 33A, 33B.

The power flow through a respective primary side stage 1a, 1b, 1c is not affected by the neutral point correction values VnpA, VnpB, VnpC when the neutral point correction values used for calculating the first and second duty cycles of that pair of secondary side stages that are connected to the secondary winding associated with the primary side stage have the same neutral point correction value. Referring to Figure 14, the neutral point correction values VnpA, VnpB of the first and second secondary side stages 3A, 3B that are connected to the first secondary winding 12a are the same when the voltage Vao between the first primary side node a and the neutral point o is the lowest one of the three voltages Vao, Vbo, Vco. Thus, the power flow through the first primary side stage 1a is not affected by the neutral point correction values. The neutral point correction values VnpB, VnpC of the second and third secondary side stages 3B, 3C and the neutral point correction values VnpC, VnpD of the third and fourth secondary side stages 3C, 3D are different, so that the power flow through the second and third primary side stages 1b, 1c is affected by the neutral point correction values.

Thus, in the example illustrated in Figure 14, a reduction of the amplitude of the voltage Von between the neutral point o and the reference node is achieved by adjusting the power flow through two of the three primary side stages 1a, 1b, 1c, wherein, in each case, only the power flow through those primary side stages is adjusted that receive the highest and the second highest of the voltages Vao, Vbo, Vco, wherein the highest voltage is the voltage with the highest amplitude and the second highest voltage is the voltage with the second highest amplitude.

According to another example, the neutral point correction values are calculated such that only the power flow through one of the primary side stages that receives the highest or the second highest voltage is adjusted. One example for calculating the neutral point correction values such that only the power flow through one of the primary side stages is adjusted is illustrated in Figures 17A and 17B. Figures 17A and 17B each show a table that illustrates calculating the neutral point correction values VnpA, VnpB, VnpC, VnpD of the secondary side stages 3A, 3B, 3C, 3D in the example in which the first primary side stage 2a receives the lowest voltage.

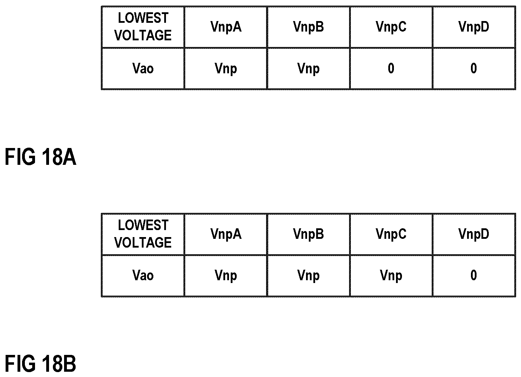

In the examples illustrated in Figures 17A and 17B, each of the neutral point correction values either equals the base neutral point correction value Vnp or zero. In the example illustrated in Figure 18A, neutral point correction values VnpA, VnpB each equal the base neutral point correction value Vnp and neutral point correction values VnpC, VnpD each equal zero, so that the neutral point correction values adjust the voltage across the second secondary winding 12b connected between the switched nodes of the second and third secondary side stages 3B, 3C. The second secondary winding 12b is coupled to the second primary side stage 2b which either receives the highest or the second highest of the voltages received by the primary side stages.

In the example illustrated in Figure 18B, neutral point correction values VnpA, VnpB, VnpC each equal the base neutral point correction value Vnp and neutral point correction value VnpD is zero, so that the neutral point correction values adjust the voltage across the third secondary winding 12b connected between the switched nodes of the third and fourth secondary side stages 3C, 3D. The third secondary winding 12c is coupled to the third primary side stage 2c which either receives the highest or the second highest of the voltages received by the primary side stages.

Referring to the above, Figures 17A and 17B illustrate the neutral point correction values in an operating scenario in which the voltage Va received by the first primary side stage 2a is the lowest input voltage. Thus, Figures 17A and 17B illustrate in which way the neutral point correction values can be modified as compared to the neutral point correction values illustrated in Figure 14 when the voltage Vao received by the first primary side input stage 2a is the lowest input voltage and when the power flow through only one of the primary side stages 2b, 2c receiving the highest and the second highest input voltages Vbo, Vco is to be adjusted. In operating scenarios, in which the second or third input stage 2b, 2c receives the lowest voltage, the neutral point correction values can be modified accordingly in order to achieve that the power flow through only one of the primary side stages receiving the highest and the second highest voltage is adjusted.

According to one example, the first and second switches 21a-21c, 22a-22c of the input stages 2a-2c are bidirectionally blocking electronic switches. A "bidirectionally blocking electronic switch" is an electronic switch that, in the off-state, is configured to block independent of a polarity of a voltage applied across the electronic switch. A bidirectionally blocking electronic switch may be implemented in various ways. Examples are explained with reference to Figures 18-20 in the following. In these figures, reference number 20 denotes an arbitrary one of the electronic switches 21a-21c, 22a-22c in the input stages 2a-2c.

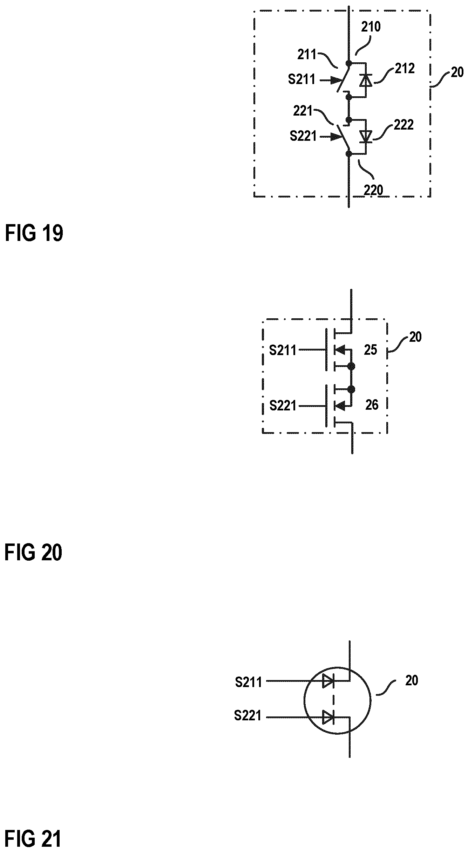

According to Figure 19, the bidirectionally blocking switch 20 may include two unidirectionally blocking electronic switches 25, 26 connected in series. These unidirectionally blocking electronic switches 25, 26 may be referred to as partial switches. A "unidirectionally blocking electronic switch" is an electronic switch that, in the off-state, is configured to block when a voltage applied across the switch has a first polarity and to conduct when the voltage has a second polarity opposite the first polarity. A unidirectionally blocking electronic switch can be considered to include a switching element 211, 221 and a freewheeling element 212, 222, such as a diode, connected in parallel with the switching element 211, 221. In the off-state, the switching element 211, 221 blocks independent of the polarity of the voltage across the electronic switch 210, 220, while the freewheeling element 212, 222 blocks when the voltage has the first polarity and conducts when the voltage has the second polarity.

The unidirectionally blocking electronic switches 210, 220 may be implemented in various ways. Basically, any type of electronic switching element and any type of rectifier element connected in parallel with the switching element may be used to implement one unidirectionally blocking electronic switch.

A MOSFET, for example, is a unidirectionally blocking electronic switch. Thus, as illustrated in Figure 20, the bidirectionally blocking electronic switch 20 may include two MOSFETs (Metal Oxide Semiconductor Field-Effect Transistors) that are connected in series such that internal body diodes of the MOSFETs are connected in anti-series. The body diode of a MOSFET acts as a freewheeling element and makes the MOSFET a unidirectionally blocking electronic switch.

According to another example illustrated in Figure 21, the bidirectionally blocking electronic switch 20 is a bidirectionally blocking gallium nitride (GaN) switch. Such bidirectionally blocking GaN switch includes two GaN HEMTs (High Electron-Mobility Transistors) as partial switches that are connected in series in such a way that internal freewheeling elements are connected in anti-series. According to one example, the two GaN HEMTs are two single GaN HEMTs connected in series. According to another example, the two GaN HEMTs are monolithically integrated and each have a control node but share the same active area. Thus, a monolithic bidirectionally blocking GaN HEMT has the benefit of using the same active area (instead of two different active areas in the case of two single GaN HEMT is connected in series), which results in a reduced on-resistance, which is the electrical resistance in the on-state.

In each case, the bidirectionally blocking electronic switch 20 is configured to receive two drive signals S211, S221. That is, the bidirectionally blocking electronic switch is configured to receive a respective drive signal S211, S221 for each of the two partial switches. The bidirectionally blocking switch is in the off-state when each of the partial switches is in the off-state and is in the on-state when each of the partial switches is in the on-state. In the off-state, the bidirectionally blocking switch blocks independent of the polarity of the voltage applied across the switch. In the on-state, the bidirectionally blocking switch conducts independent of the polarity of the voltage applied across the switch. Each of the two drive signals S211, S221 received by one bidirectionally blocking electronic switch essentially equals the respective drive signal S21a-S21c, S22a-S22c illustrated in Figures 4 and 6, wherein during switch-over between the on-state and the off-state of the bidirectionally blocking switch there may be a short time period in which one of the partial switches is already blocking while the other one of the partial switches is still conducting. This is basically known in the operation of a bidirectionally blocking switch, so that no further explanation is required in this regard.

The electronic switches 31A-31D, 32A-32D of the secondary side stages 3A-3D are unidirectionally blocking electronic switches, for example. According to one example, these switches are connected between the switched nodes 33A-33D and the output nodes p, n such that freewheeling element (rectifier element) of a first switch 31A-31D is conducting when the electrical potential at the respective switched node 33A-33D is higher than the electrical potential at the first output node p and the freewheeling element (rectifier element) of a second switch 32A-32D is conducting when the electrical potential at the respective switched node 33A-33D is lower than the electrical potential at the second output node n. Just for the purpose of illustration, the rectifier elements of the unidirectionally blocking electronic switches are illustrated as diodes in the examples. According to one example, the first and second switches 31A-31D, 32A-32D of the output circuit 3 are MOSFETs.

Some of the aspects explained above are briefly summarized in the following with reference to numbered examples. the following with reference to numbered examples.

Example 1. A power converter, including: three first nodes and two second nodes; three transformers each including a first winding and a second winding inductively coupled with the first winding; a first circuit with three first stages each coupled to a respective one of the first nodes, the first winding of a respective one of the transformers, and a common circuit node; and a second circuit with four second stages each including a switched node and each coupled to the second nodes via further nodes (different from the switched node), wherein the second windings are connected in series, and wherein the four second stages are connected to the second windings such that each second winding is connected between the switched nodes of a respective pair of the four second stages.

Example 2. The power converter of example 1, wherein each of the input stages includes a switch half-bridge having a first switch and a second switch connected with each other at second first tap and connected in series between the respective first node and the common circuit node, wherein a first circuit node of the first winding of the respective transformer is connected to the first tap, and wherein second circuit nodes of the first windings are connected to each other

Example 3. The power converter of example 2, wherein the second circuit nodes of the first windings are connected to the common circuit node.

Example 4. The power converter of any one of examples 1 to 3, wherein each of the three first nodes is configured to receive a grid voltage that is reference to a reference node, and wherein the common circuit node is connected to the reference node.

Example 5. A method for operating a power converter, wherein the power converter includes: three first nodes and two second nodes; three transformers each including a first winding and a second winding inductively coupled with the first winding; a first circuit with three first stages each coupled to a respective one of the first nodes, the first winding of a respective one of the transformers, and a common circuit node; and a second circuit with four second stages each including a switched node and each coupled to the second nodes via further nodes, wherein the second windings are connected in series, and wherein the four second stages are connected to the second windings such that each second winding is connected between the switched nodes of a respective pair of the four second stages, and wherein the method includes: determining three voltage values, each associated with a respective one of the first nodes; for each of the second stages, adjusting a first duty cycle and a second duty cycle dependent on two of the three voltage values and dependent on an asymmetry value; and operating the secondary side stages based on the first and second duty cycles.

Example 6. The method according to example 5, wherein operating the power converter includes operating the power converter in a first operating mode in which a respective voltage is received at each of the first nodes, and wherein each of the three voltage values represents a respective one of the voltages received at the first nodes.

Example 7. The method according to example 5, wherein operating the power converter includes operating the power converter in a second operating mode in which a respective voltage is provided by the power converter at each of the first nodes, and wherein each of the three voltage values is dependent on a voltage reference and the voltage provided at a respective one of the first nodes.

Example 8. The method according to any one of examples 5 to 7, wherein the asymmetry value is dependent on the three voltage values.

Example 9. The method according to any one of examples 5 to 8, wherein adjusting the first duty cycle and the second duty cycle of each of the second stages further includes adjusting the first duty cycle and the second duty cycle dependent on a transformer value that is dependent on a winding ratio of the transformers.

Example 10. The method according to example 8, wherein the transformer value is further dependent on a voltage between the second nodes.

Example 11. The method according to any one of examples 5 to 10, wherein adjusting the first duty cycle and the second duty cycle of each of the second stages further includes adjusting the first duty cycle and the second duty cycle dependent on a common mode value that is dependent on the voltage values and the asymmetry value.

Example 12. The method according to any one of examples 5 to 11, wherein the three first stages are connected at a neutral point, wherein the primary windings of the transformers are connected at a star point, and wherein the neutral point and the star point are connected.

Example 13. The method according to any one of examples 5 to 11, wherein adjusting the first duty cycle and the second duty cycle of each of the second stages further includes adjusting the first duty cycle and the second duty cycle dependent on a neutral point correction value that is dependent on voltages between the first nodes and a neutral point of the input circuit.

Example 14. The method of any one of examples 5 to 13, wherein operating the power converter further includes synchronously operating the first stages at a predefined duty cycle in a plurality of drive cycles that each include a first half cycle and a second half cycle, and wherein operating the second stages based on the first and second duty cycles includes operating the second stages based on the first duty cycles during the first half cycles of operation of the first stages and based on the second duty cycles during the second half cycles of operation of the first stages.

Example 15. The method of example 14, further including, operating the first stages and the second stages such that there is an adjustable phase shift between the drive cycles of the first stages and the drive cycles of the second stages.

**Claims**

1. A power converter, comprising:

   three first nodes (a, b, c) and two second nodes (p, n);
   three transformers (1a, 1b, 1c) each comprising a first winding (11a, 11b, 11c) and a second winding (12a, 12b, 12c) inductively coupled with the first winding (11a, 11b, 11c);
   a first circuit (2) with three first stages (2a, 2b, 2c) each coupled to a respective one of the first nodes (a, b, c), the first winding (11a, 11b, 11c) of a respective one of the transformers (1a, 1b, 1c), and a common circuit node (o); and
   a second circuit (3) with four second stages (3A, 3B, 3C, 3D) each comprising a switched node (33A, 33B, 33C, 33D) and each coupled to the second nodes (p, n) via further nodes,
   wherein the second windings (12a, 12b, 12c) are connected in series, and
   wherein the four second stages (3A, 3B, 3C, 3D) are connected to the second windings (12a, 12b, 12c) such that each second winding (12a, 12b, 12c) is connected between the switched nodes (33A, 33B, 33C, 33D) of a respective pair of the four second stages (3A, 3B, 3C, 3D).

2. The power converter of claim 1,

   wherein each of the input stages (2a, 2b, 2c) comprises a switch half-bridge having a first switch (21a, 21b, 21c) and a second switch (22a, 22b, 22c) connected with each other at second first tap (23a, 23b, 23c) and connected in series between the respective first node (a, b, c) and the common circuit node (o),
   wherein a first circuit node of the first winding (11a, 11b, 11c) of the respective transformer (1b, 1b, 1c) is connected to the first tap (23a, 23b, 23c), and
   wherein second circuit nodes of the first windings (11a, 11b, 11c) are connected to each other.

3. The power converter of claim 2,
   wherein the second circuit nodes of the first windings (11a, 11b, 11c) are connected to the common circuit node (o).

4. The power converter of any one of claims 1 to 3,

   wherein each of the three first nodes (a, b, c) is configured to receive a grid voltage (Vo, Vb, Vc) that is referenced to a reference node (n), and
   wherein the common circuit node (o) is connected to the reference node (n).

5. A method for operating a power converter,
   wherein the power converter comprises:

   three first nodes (a, b, c) and two second nodes (p, n);
   three transformers (1a, 1b, 1c) each comprising a first winding (11a, 11b, 11c) and a second winding (12a, 12b, 12c) inductively coupled with the first winding (11a, 11b, 11c);
   a first circuit (2) with three first stages (2a, 2b, 2c) each coupled to a respective one of the first nodes (a, b, c), the first winding (11a, 11b, 11c) of a respective one of the transformers (1a, 1b, 1c), and a common circuit node (o);

and
a second circuit (3) with four second stages (3A, 3B, 3C, 3D) each comprising a switched node (33A, 33B, 33C, 33D) and each coupled to the second nodes (p, n) via further nodes,
wherein the second windings (12a, 12b, 12c) are connected in series, and
wherein the four second stages (3A, 3B, 3C, 3D) are connected to the second windings (12a, 12b, 12c) such that each second winding (12a, 12b, 12c) is connected between the switched nodes (33A, 33B, 33C, 33D) of a respective pair of the four second stages (3A, 3B, 3C, 3D), and
wherein the method comprises:

determining three voltage values (Va', Vb', Vc'), each associated with a respective one of the first nodes (a, b, c);
for each of the second stages (3A, 3B, 3C, 3D), adjusting a first duty cycle (dpA, dpB, dpC, dpD) and a second duty cycle (dnA, dnB, dnC, dnD) dependent on two of the three voltage values (Va', Vb', Vc') and dependent on an asymmetry value (Vasymn, Vasymp); and
operating the secondary side stages (3A, 3B, 3C, 3D) based on the first and second duty cycles (dpA, dpB, dpC, dpD, dnA, dnB, dnC, dnD).

6.   The method according to claim 5,

wherein operating the power converter comprises operating the power converter in a first operating mode in which a respective voltage (Va, Vb, Vc) is received at each of the first nodes (a, b, c), and
wherein each of the three voltage values (Va', Vb', Vc') represents a respective one of the voltages received at the first nodes (a, b, c).

7.   The method according to claim 5,

wherein operating the power converter comprises operating the power converter in a second operating mode in which a respective voltage (Va, Vb, Vc) is provided by the power converter at each of the first nodes (a, b, c), and
wherein each of the three voltage values (Va', Vb', Vc') is dependent on a voltage reference (Va*, Vb*, Vc*) and the voltage (Va, Vb, Vc) provided at a respective one of the first nodes (a, b, c).

8.   The method according to any one of claims 5 to 7,
wherein the asymmetry value (Vasymn, Vasymp) is dependent on the three voltage values (Va', Vb', Vc').

9.   The method according to any one of claims 5 to 8,
wherein adjusting the first duty cycle (dpA, dpB, dpC, dpD) and the second duty cycle (dnA, dnB, dnC, dnD) of each of the second stages (3A, 3B, 3C, 3D) further comprises adjusting the first duty cycle (dpA, dpB, dpC, dpD) and the second duty cycle (dnA, dnB, dnC, dnD) dependent on a transformer value (kv) that is dependent on a winding ratio of the transformers (1a, 1b, 1c).

10.  The method according to claim 8,
wherein the transformer value (kv) is further dependent on a voltage (Vpn) between the second nodes (p, n).

11.  The method according to any one of claims 5 to 10,
wherein adjusting the first duty cycle (dpA, dpB, dpC, dpD) and the second duty cycle (dnA, dnB, dnC, dnD) of each of the second stages (3A, 3B, 3C, 3D) further comprises adjusting the first duty cycle (dpA, dpB, dpC, dpD) and the second duty cycle (dnA, dnB, dnC, dnD) dependent on a common mode value (Vcmn, Vcmp) that is dependent on the voltage values (Va', Vb', Vc') and the asymmetry value (Vasymn, Vasymp).

12.  The method according to any one of claims 5 to 11,

wherein the three first stages (21, 2b, 2c) are connected at a neutral point (o),
wherein the primary windings (11a, 11b, 11c) of the transformers are connected at a star point (s), and
wherein the neutral point (o) and the star point (s) are connected.

13.  The method according to any one of claims 5 to 11,
wherein adjusting the first duty cycle (dpA, dpB, dpC, dpD) and the second duty cycle (dnA, dnB, dnC, dnD) of each of the second stages (3A, 3B, 3C, 3D) further comprises adjusting the first duty cycle (dpA, dpB, dpC, dpD) and the second duty cycle (dnA, dnB, dnC, dnD) dependent on a neutral point correction value (VnpA, VnpB, VnpC, VnpD) that is dependent on voltages (Vao, Vbo, Vco) between the first nodes (a, b, c) and a neutral point (o) of the input circuit (2).

14. The method of any one of claims 5 to 13,

wherein operating the power converter further comprises synchronously operating the first stages (2a, 2b, 2c) at a predefined duty cycle in a plurality of drive cycles that each include a first half cycle and a second half cycle, and wherein operating the second stages (3A, 3B, 3C, 3D) based on the first and second duty cycles (dpA, dpB, dpC, dpD, dnA, dnB, dnC, dnD) comprises operating the second stages (3A, 3B, 3C, 3D) based on the first duty cycles (dpA, dpB, dpC, dpD) during the first half cycles of operation of the first stages (2a, 2b, 2c) and based on the second duty cycles (dnA, dnB, dnC, dnD) during the second half cycles of operation of the first stages (2a, 2b, 2c).

15. The method of claim 14, further comprising,
operating the first stages (2b, 2b 2c) and the second stages (3A, 3B, 3C, 3D) such that there is an adjustable phase shift (PS) between the drive cycles of the first stages (2a, 2b, 2c) and the drive cycles of the second stages (3A, 3B, 3C).

FIG 1

EP 4 686 056 A1

FIG 2

FIG 3

PS       PS

S21a

Ton21a

S21a

Ton21b

S21a

Ton21c     T

S31A

Tonp31A     Tonn31A

S31B

Tonp31B     Tonn31B

S31C

Tonp31C     Tonn31C

S31D

Tonp31D     Tonn31D

t

## FIG 4

41     42

Sref   +    PI   PS

−

Spn

## FIG 5

FIG 6

**FIG 7**

FIG 8

FIG 9

Vpn

V24a

Va    Vb    Vc

Ia    Ib    Ic

0.5    dpA=dpD    dpB    dpC

0.5    dnB    dnC    dnA=dnD

t

FIG 10

FIG 11A

FIG 11B

FIG 12

FIG 13

| LOWEST VOLTAGE | VnpA | VnpB | VnpC | VnpD |
|---|---|---|---|---|
| Vao | 2· Vnp | 2· Vnp | Vnp | 0 |
| Vbo | 2· Vnp | Vnp | Vnp | 0 |
| Vco | 2· Vnp | Vnp | 0 | 0 |

FIG 14

FIG 15

FIG 16

FIG 17

| LOWEST VOLTAGE | VnpA | VnpB | VnpC | VnpD |
|---|---|---|---|---|
| Vao | Vnp | Vnp | 0 | 0 |

FIG 18A

| LOWEST VOLTAGE | VnpA | VnpB | VnpC | VnpD |
|---|---|---|---|---|
| Vao | Vnp | Vnp | Vnp | 0 |

FIG 18B

FIG 19

FIG 20

FIG 21

Europäisches
Patentamt

European
Patent Office

Office européen
des brevets

## EUROPEAN SEARCH REPORT

**Application Number**

EP 24 19 0175

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZHANG MAFU ET AL: "A Novel Single-Stage Bidirectional Isolated Three-Phase Resonant Mode AC-DC PFC Converter", 2023 IEEE ENERGY CONVERSION CONGRESS AND EXPOSITION (ECCE), IEEE, 29 October 2023 (2023-10-29), pages 2222-2229, XP034508607, DOI: 10.1109/ECCE53617.2023.10362374 [retrieved on 2023-12-29] | 1-13 | INV. H02M1/00 H02M1/42 H02M7/217 H02M7/48 |
| A | * page 2222 - page 2223; figure 1 * ----- | 14,15 | |
| Y | RAEF ABOELSAUD ET AL: "Review of three-phase inverters control for unbalanced load compensation", INTERNATIONAL JOURNAL OF POWER ELECTRONICS AND DRIVE SYSTEMS (IJPEDS), vol. 10, no. 1, 1 March 2019 (2019-03-01), page 242, XP055612562, ISSN: 2088-8694, DOI: 10.11591/ijpeds.v10.i1.pp242-255 * page 242 - page 245; figure 2 * ----- | 1-13 | |
| | | | **TECHNICAL FIELDS SEARCHED (IPC)** |
| Y | HU WEI ET AL: "A Unified Modulation Strategy Based on Current Prediction Control for Open-Winding PMSM with Four Bridge Arms", 2019 IEEE APPLIED POWER ELECTRONICS CONFERENCE AND EXPOSITION (APEC), IEEE, 17 March 2019 (2019-03-17), pages 1865-1870, XP033556041, DOI: 10.1109/APEC.2019.8721976 [retrieved on 2019-05-24] * page 1865 - page 1866; figure 1 * ----- | 1-13 | H02M |

The present search report has been drawn up for all claims

| Place of search | Date of completion of the search | Examiner |
|---|---|---|
| The Hague | 16 December 2024 | Gusia, Sorin |

EPO FORM 1503 03.82 (P04C01)